# EUROPÄISCHE PATENTSCHRIFT

(11) **EP 0 512 288 B1**
(45) Veröffentlichungstag und Bekanntmachung des Hinweises auf die Patenterteilung: **27.12.1995**
(21) Anmeldenummer: 92106496.0
(22) Anmeldetag: 15.04.1992
(51) Int. Cl.: B01D 33/04, B01D 33/46, B01D 33/64, B01D 33/80

(54) **Bandfilter zum Ausbringen von Fremdstoffpartikeln aus Flüssigkeitsbädern**
Band filter for removing impurities from liquid baths
Filtre à bande pour séparer des impuretés des bains liquides

(30) Priorität: 04.05.1991 DE 4114603; 13.03.1992 DE 9203370 U
(43) Veröffentlichungstag der Anmeldung: 11.11.1992
(73) Patentinhaber: SMS SCHLOEMANN-SIEMAG AKTIENGESELLSCHAFT, 40237 Düsseldorf (DE)
(72) Erfinder: Schimion, Werner, W-5912 Hilchenbach (DE); Kuhlmann, Joachim, W-5910 Kreuztal (DE); Bertrand, Karl J., W-4040 Neuss (DE); Jung, Hubert, W-5912 Hilchenbach (DE)
(74) Vertreter: Müller, Gerd, Dipl.-Ing.

(56) Entgegenhaltungen:
- EP-A- 0 116 009
- EP-A- 0 407 363
- EP-A- 0 458 413
- DE-A- 1 179 518
- DE-A- 1 223 806
- FR-A- 1 421 665
- GB-A- 1 462 304
- GB-A- 2 174 014
- US-A- 3 087 620
- US-A- 3 618 772
- US-A- 3 704 787
- US-A- 4 289 619

## Beschreibung

Aus der US-A-37 04 787, der die gleiche Aufgabenstellung zugrunde liegt, wie der der Erfindung, nämlich das von einer Rolle abgewikkelte Filterbandvlies in eine Badwanne einzubringen, die die von Fremdpartikein zu befreiende Flüssigkeit enthält, innerhalb dieser Badwanne über die Öffnung einer Unterdruckkammer zu führen und dabei den Flüssigkeitsdurchtritt außerhalb des Filterbandvlieses in die Unterdruckkammer sowie ein Aufschwimmen des Filterbandvlieses über dieser Öffnung zu verhindern, geht die folgende Lösung dieser Aufgabe hervor: Das von einer Rille abgezogene Filterbandvlies wird auf einen endlosen, flüssigkeitsdurchlässigen Traggurt aufgelegt, der in der Badwanne von um Führungswalzen über die Öffnungen der Unterdruckkammer geführt wird. Der Traggurt gleitet dabei oberhalb der Öffnung auf Stützleisten in Bewegungsrichtung des Traggurtes. Diese Stützleisten verlaufen mit Abstand parallel nebeneinander. Der Flüssigkeitsdurchtritt in die Unterdruckkammer außerhalb des Filterbandvlieses wird dabei durch, mit dem Traggurt umlaufende Dichtmanschetten verhindert, die auf den Rändern des Traggurtes aufliegen. Die Ränder des Filterbandvlieses liegen ihrerseits auf der Oberseite dieser Dichtanordnung auf dem Traggurt auf. Diese Anordnung mit den profilierten Dichtmanschetten, die synchron mit dem Traggurt umlaufend, entsprechend geführt werden müssen, erfordern einen erheblichen technischen Aufwand und sind auch verhältnismäßig verschleißanfällig. Sie vermögen offenbar auch nicht bei einem Stillstand des Traggurtes ein Aufschwimmen des oben auf diesem liegenden Filterbandvlieses zu verhindern.

Das Problem der Seitenabdichtung der Öffnung der Unterdruckkammer bei aufliegendem Filterbandvlies bzw. Traggurt wird auch in einer Reihe weiterer Druckschriften (US-A-4,137,169, 4,693,863 und 4,880,538 auf unterschiedlichste Weise z.B. mit erheblichem technischen Aufwand gelöst.

Nach der Erfindung wird die Aufgabe dadurch gelöst, daß weitere Führungswalzen, die als Band-Andruckwalzen ausgebildet sind, von oben her auf das Filterbandvlies aufleg- und von diesem abhebbar sind, vorgesehen werden, und die derart angeordnet sind, daß das Filterband jeweils mit dem gesamten filterwirksamen Bandabschnitt gleichmäßig über der Öffnung der Unterdruckkammer aufliegt.

Die beiden Führungswalzen übernehmen dabei die Aufgabe des Andrükkens der Filterbandvlies-Traggurt-Kombination gegen die Gleitflächen der stützenden Gleitfläche. Die Bewegung des Filterbandvlieses über die Öffnung der Unterdruckkammer erfolgt dabei ohne direkte Berührung mit der Abdeckung der Öffnung. Dies übernimmt hier der Traggurt. Für das Filterbandvlies können deshalb auch sehr leichte und dünne, weniger reißfeste Materialien verwendet werden. Der praktische Betrieb mit dieser erfindungsgemäßen Anordnung hat bewiesen, daß die beiden, vor und hinter der Öffnung aufgelegten, als Band-Andruckwalzen wirksamen Führungswalzen neben der Abdichtwirkung ein Aufschwimmen des Filterbandvliesabschnittes über der Öffnung zuverlässig verhindern.

Die Stützelemente können erfindungsgemäß schienenförmige Leisten sein, auf denen Auflagen als Gleitflächen vorgesehen sind.

Werden, wie die Erfindung weiter vorsieht, die die Andruckwalzen bildenden Führungswalzen in einem, von oben in die Badwanne absenk- und heraushebbaren korbförmigem Tragrahmen angeordnet und dieser korbförmige Tragrahmen in Hubrichtung positionseinstell- und festlegbar ausgebildet, dann können mit Hilfe dieses Tragrahmens Andruckwalzen und Führungswalzen aus der Badwanne herausgehoben und gewartet werden, ohne daß zu diesem Zweck zunächst die Badwanne entleert werden muß. Weiter besteht die Möglichkeit, dabei den Andruckwalzen und Führungswalzensatz zusammen mit dem Tragrahmen gegen einen anderen auszutauschen.

Die Gleitflächen über der Öffnung der Unterdruckkammer können durch die Umfangsringflächen von Ringbunden einer Mehrzahl von, in Bewegungsrichtung des Traggurtes und Filterbandvlieses mit Abständen über dem Boden der Badwanne, in dieser gelagerte Tragwalzen gebildet werden und es können Andruckwalzen in die, zwischen den Tragwalzen gebildeten Abstandsspalte einbring- und gegen das, auf dem, den Abstandsspalt bildenden Umfangsflächenabschnitten der Tragwalzen aufliegende Filterbandvlies andrückbar sein. Mit einer solchen Ausbildung und Anordnung läßt sich eine große wirksame Filterfläche in einer verhältnismäßig kleinen Badwanne unterbringen. Da die auf den Traggurt des Filterbandvlieses aufzubringenden Zugkräfte jeweils bei der Umführung um die Tragwalzen und die zwischen diesen befindlichen Andruckwalzen innerhalb der Teilung der Tragwalzen auf- und wieder abgebaut werden, lassen sich sehr lange und auch breite wirksame Filterflächen innerhalb der Badwanne erzielen.

Die Umfangsflächen der Tragwalzen bzw. der Andruckwalzen können Perforationen aufweisen. Wie die Erfindung weiter vorschlägt, kann der Traggurt aus einer Gelenkkette bestehen, an deren Kettenbolzen über die Gurtbreite jeweils Reihen einer Mehrzahl von Kettenlaschen mit Abstand nebeneinander angelenkt sind, wobei dem Boden der Badwanne zugewandte ebene Außenflächen der Kettenlaschen auf den Gleitflächen aufliegen. Die Kettenlaschen jeder über die Bandbreite verteilten Reihe werden dabei zweckmäßig in Gruppen von dicht nebeneinanderliegenden Laschen aufgeteilt und diese Gruppen in dem Bereich oberhalb jeweils einer der Stützflächen angeordnet. Damit wird eine besonders gleichmäßige ebene Auflage der Gelenkkette auf den Stützflächen erreicht. Wenn dann die Breite der beiden über die Breite der Gelenkkette jeweils außenliegenden Gruppen von Kettenlaschen gleich oder größer ist als die Breite der darunter befindli chen beiden äußeren Stützflächen, wird eine besonders wirksame Abdichtung der Badwanne und der Unterdruckkammer geschaffen. Bei Stützblechen, die auf, über dem Boden der Badwanne angeordneten schienenförmigen Leisten verlaufen, bilden die vom Unterdruck in der Unterdruckkammer erzeugten druckbeaufschlagten äußeren Kettenlaschengruppen mit den Stützflächen jeweils über die Länge der gesamten Bewegungsbahn des Filterbandvlieses über dem Boden der Badwanne eine ununterbrochene breite Dichtlinie, die auch während der Bewegung des Filterbandvlieses bestehen bleibt.

Die erfindungsgemäße Integration der Kettenlaschen in ein Siebgewebeband bzw. den Traggurt des Filterbandvlieses erlaubt die Übertragung großer Zugkräfte, da diese nur von den Kettenlaschen übertragen werden, und die zwischen den Kettenlaschenreihen befindlichen Gurtflächen nicht zugbelastet sind; sie üben nur eine Stützfunktion für das Filterbandvlies aus und brauchen deshalb nur für diese Stützfunktion ausgebildet und bemessen zu werden.

Besondere Vorteile der Erfindung ergeben sich, wenn in dem korbförmigen Tragrahmen ein Umlaufgurt aus einem Paar von Endlos-Tragketten angeordnet ist, mit denen, quer zu deren Bewegungsrichtung hintereinanderliegende Stabkörper verbunden sind, die bei Betriebsstellung des, in die Badwanne abgesenkten Tragrahmens mit dem Umlauf der Endlos-Tragketten an der Oberseite des Filterbandvlieses anliegen bzw. im Abstand von diesem umlaufen und die Stabkörper, wie dies an sich bekannt ist, aus einem Magnetwerkstoff bestehen, weil mit dieser Ausbildung der Einrichtung nicht nur Fremdstoffpartikel schlechthin aus dem Flüssigkeitsbad ausgebracht werden können, sondern vorab auch ferritische Partikel, bevor diese das Filterbandvlies erreichen. Diese Vorabmagnetisierung der ferritischen Partikel führt dabei noch zu einem synergistischen Effekt, der darin besteht, daß sehr kleine ferritische Partikel zu größeren Partikelgebilden koagulieren und dadurch noch vom Filterbandvlies abgefangen werden können, wenn sie sich nicht an der Oberfläche der, aus Magnetwerkstoff bestehenden Stabkörper abgesetzt haben. Die Einrichtung erlaubt dabei den beliebigen Wechsel der Betriebsarten, entweder nur als Magnetfilter oder nur als Vliesfilter oder beide Filterarten in Kombination, und dies während des laufenden Betriebes.

Die Endlostragketten werden nach einem weiteren Vorschlag der Erfindung mindestens im Bereich ihrer Umführung um die Andruckwalzen und um die Treibwalzen in seitlichen, in ortsfesten Tragrahmen angeordneten Führungskulissen geführt und am Umfang der Andruckwalzen können dem Querschnitt der Stabkörper angepaßte, parallel zur Rollenachse verlaufende Mitnehmerausnehmungen angeordnet sein. Der Traggurt kann im Bereich der Tragwalzen mit seinen Seitenbereichen auf Ringstutzen und im Bereich unter den Andruckwalzen auf Stützschalen aufliegen, die jeweils mit der Badwanne verbunden sind.

Für den kontinuierlichen Betrieb des Traggurtes mit aus einem Magnetwerkstoff bestehenden Stabkörpern können mit Hilfe von, an sich bekannten Einrichtungen, auf der Umfangsfläche der Stabkörper haftende ferritische Partikel von, den Stabquerschnitt von zwei Seiten her einfassenden, über die Stablänge verfahrbaren Kratzerprofilen von der Umfangsfläche entfernt werden. Die Kratzerprofile, die den Stabquerschnitt, von zwei Seiten her einfassend, über die Stablänge verfahrbar ausgebildet sind, können jeweils aus zwei oder mehreren, nebeneinanderliegenden Paaren von, oberhalb und unterhalb des Stabkörpers angeordneten, elastisch gegen diesen andrückbaren Bandförderern bestehen, wobei deren Transportbewegung gegenüber der Bewegungsrichtung der Endlostragkette in einem bestimmten Winkel verläuft, der so bemessen ist, daß bei entsprechend aufeinander abgestimmten Bewegungen der Endlostragketten und der Bandförderer die Zeitspanne zwischen Beginn und Ende einer Abstreifbewegung des Kratzerprofilpaares der, in Bewegungsrichtung der Bandförderer des, in Bewegungsrichtung der Bandförderer ersten Bandförderers über die Stablänge entspricht, innerhalb derer der Stabkörper unter diesem ersten Bandförderer her transportiert wurde, und die entsprechende Abstreifbewegung des Kratzerprofilpaares des nächsten Bandförderers sich mit der entsprechend gleichen Zeitspanne unmittelbar daran anschließt.

Da die erfindungsgemäß ausgebildeten Bandfilter es erforderlich machen, das Niveau der Badflüssigkeit möglichst konstant zu halten, unabhängig davon, welche größeren oder kleineren Mengen unbehandelter Flüssigkeit der Badwanne zugeführt werden, weil der kontinuierliche Filterbetrieb bei Verwendung einer Kreiselpumpe einen entsprechenden kontinuierlichen, mengenkonstanten Abzug der Badflüssigkeit voraussetzt. Die Erfindung schlägt deshalb weiter vor, das Niveau der Flüssigkeit in der Badwanne trotz wechselnder Mengen des Zuflusses der Badflüssigkeit und konstant bleibender Menge der abgezogenen Badflüssigkeit im wesentlichen dadurch konstant zu halten, daß in Abflußrichtung hinter der Förderpumpe ein stufenlos verstellbarer Strömungsteiler angeordnet wird, der einen Teil der Gesamtmenge der abfließenden, behandelten Flüssigkeit in die Badwanne zurück, und den anderen Teil, bzw. die Gesamtmenge der Badflüssigkeit von der Badwanne wegleitet; dies in Abhängigkeit von dem Niveau der Badflüssigkeit in der Badwanne. Die Anordnung dieses Strömungsteilers führt dazu, daß einerseits der Ablauf der behandelten Badflüssigkeit gedrosselt und andererseits der Rücklauf dieser Badflüssigkeit ganz oder teilweise in die Badwanne erfolgen kann. Bei sinkendem Niveau der Badflüssigkeit kann entsprechend mehr Flüssigkeit in die Badwanne zurück und weniger der behandelten Badflüssigkeit in die nachgeschalteten Vorratsbehälter abgeleitet werden. Der Strömungsteiler kann dabei, wie die Erfindung weiter vorsieht, aus einem senkrecht in einem Zylinder auf- und abbeweglichen Schieberkolben bestehen, der über Hebellenke mit einem, von der Badflüssigkeit getragenen Schwimmkörper verbunden ist. Der Schieber-Kolben kann dabei eine zentrale Zuführ-Ausnehmung und zwei radial von dieser abzweigende, axial gegeneinander versetzte Austritts-Ausnehmungen aufweisen, denen, in einer gemeinsamen Radialebene angeordnete Austritts-Ausnehmungen in dem Zylinder zugeordnet sind. Der Strömungsteiler kann auch aus, achskonzentrisch, aneinander anliegend, ineinandergesteckten und gegeneinander verdrehbaren Zylinderrohren bestehen, wobei das äußere der Zylinderrohre ortsfest angeordnet ist und achsparallele Austrittsausnehmungen aufweist, und das innere Zylinderrohr drehbar gelagert, entsprechende, diesen Austrittsausnehmungen zugeordnete, ebenfalls achsparallele Austrittsausnehmungen und an einer Stirnseite eine Eintrittsöffnung aufweist und an der anderen, geschlossenen Stirnseite mit einem einwarmigen, einen Schwimmkörper tragenden Hebel verbunden ist.

Die, mit dem vorbeschriebenen Merkmalen ausgesatattete Einrichtung erlaubt es, den Traggurt mit den Profilstäben kontinuierlich umlaufen zu lassen und während des Umlaufs ebenfalls kontinuierlich die auf der Oberfläche der Stabkörper haftenden ferritischen Partikel abzustreifen und zu entfernen.

Die Erfindung wird anhand der in der Zeichnung dargestellten Ausführungsbeispiele näher erläutert. In der Zeichnung zeigen
- Figur 1: die Bad-Wanne im Senkrechtschnitt von der Seite gesehen
- Figur 2: die Draufsicht auf Figur 1,
- Figur 3: einen Schnitt nach der Linie A-A durch Figur 1,
- Figur 4: eine Einzelheit nach Schnitt B-B aus Figur 2 in vergrößertem Maßstab,
- Figur 5: eine andere Ausbildungsform des Bandfilters mit der Bad-Wanne im Senkrechtschnitt von der Seite gesehen,
- Figur 6: einen Schnitt nach der Linie C-C durch Figur 5 in vergrößertem Maßstab,
- Figur 7: einen Schnitt nach der Linie D-D durch Figur 5 in vergrößertem Maßstab,
- Figur 8: eine Einzelheit der Seitenansicht von Figur 6 in schematischer Darstellung,
- Figur 9: ein weiteres Ausführungsbeispiel von der Seite gesehen in schematischer Darstellung,
- Figur 10: die Seitenansicht von Figur 9, ebenfalls in schematischer Darstellung,
- Figur 11: die Draufsicht auf Figur 9, in schematischer Darstellung,
- Figur 12: ein Antriebsschema auch in schematischer Darstellung,
- Figur 13: eine Ausbildungsform und die Anordnung des Strömungsteilers in schematischer Darstellung,
- Figur 14: eine andere Ausbildung des Strömungsteilers nach Fig. 13 im Axialschnitt und
- Figur 15: einen Schnitt nach der Linie E-E durch Fig. 13.

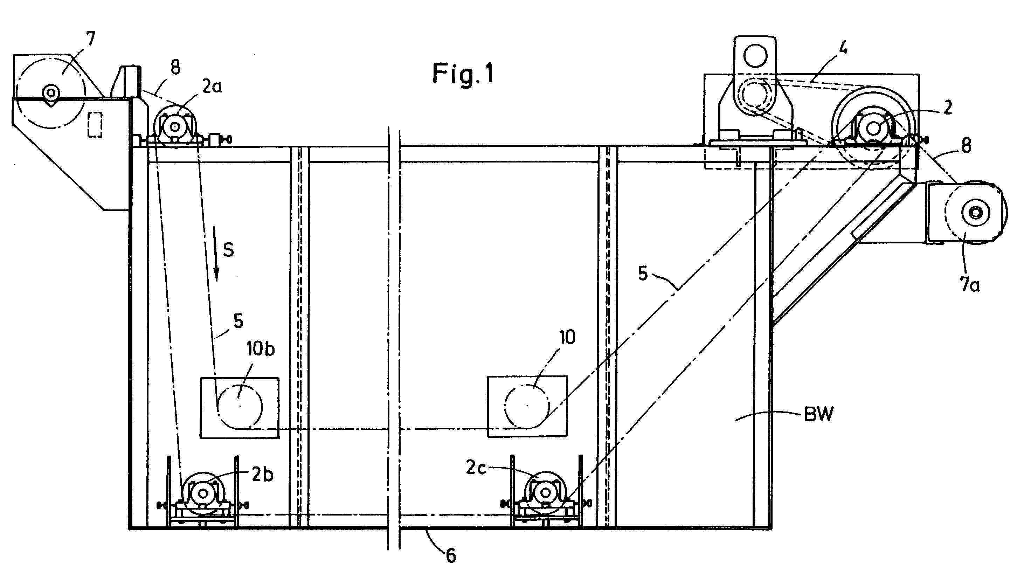

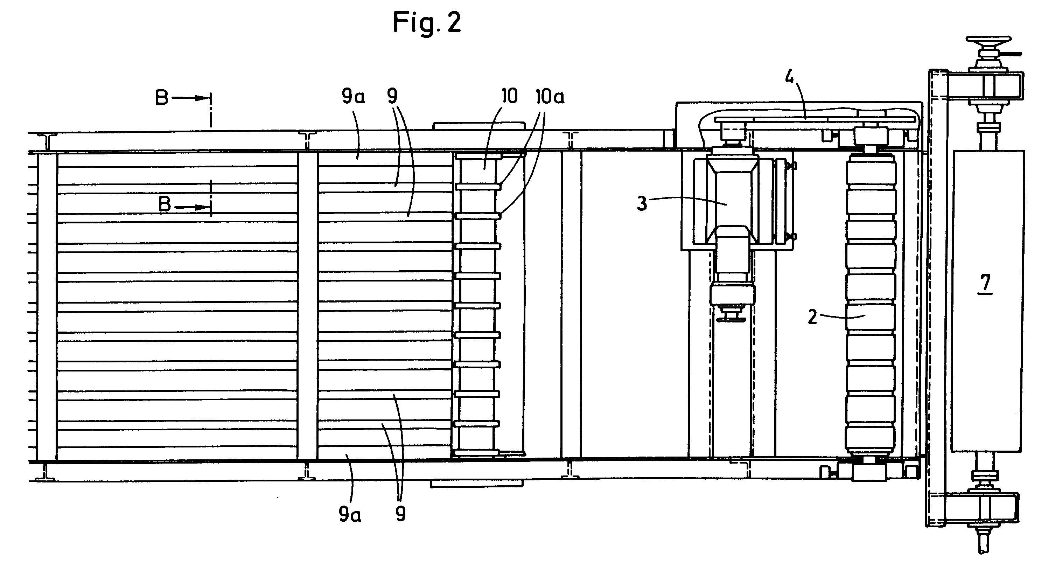

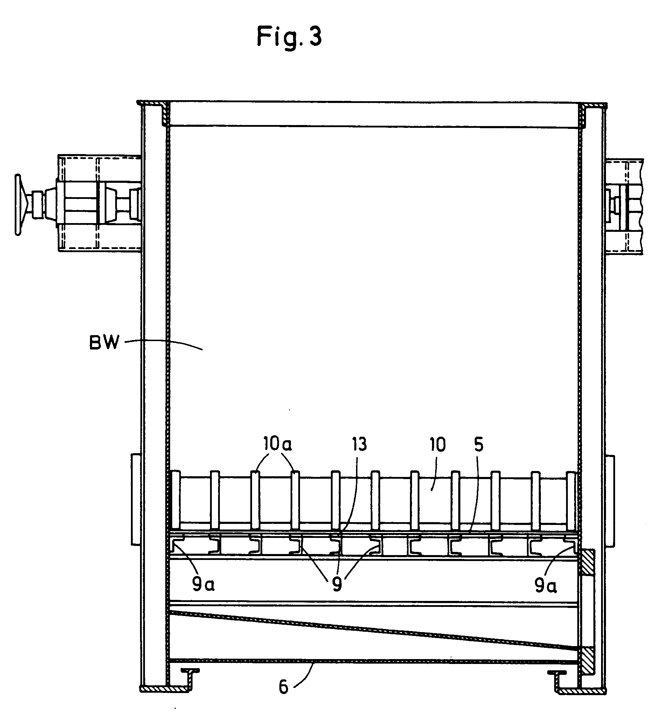

Wie aus den Fig. 1, 2 und 3 zu ersehen, sind in der das Flüssigkeitsbad aufnehmenden Bad-Wanne BW Führungswalzen 2, 10, 10b, 2a, 2b, 2c angeordnet, von denen die Führungswalze 2 die von einem Motor 3 über ein Vorgelege 4 angetriebene Antriebswalze bildet. Die übrigen Führungswalzen 10, 10b, 2a, 2b und 2c führen den endlosen, strichpunktiert angedeuteten Traggurt 5, von der Führungswalze 2a in Richtung des eingezeichneten Pfeils S schräg nach unten in die Bad-Wanne BW, lenken ihn in eine waagerechte Ebene oberhalb des Bodens 6 und bringen ihn anschließend wieder nach oben aus der Bad-Wanne BW heraus zu der, die Antriebsrolle bildenden Führungswalze 2. Auf den Traggurt 5 wird das von einer, an der Stirnseite der Bad-Wanne BW angeordneten Rolle 7 abgewickelte Filterbandvlies 8 aufgelegt und bildet mit diesem zusammen das Filterband . Dieser liegt (Fig. 3) auf in Richtung zu der, durch den Pfeil S angedeuteten Bandführungsrichtung parallel nebeneinander verlaufenden Gleitflächen auf, die hier durch über den Boden 6 der Bad-Wanne BW angeordnete schienenförmige Leisten 9 gebildet werden (Fig. 2 und Fig. 3). Im Bereich dieser Leisten 9 sind auf das Filterband Andruckwalzen 10, 10b auflegbar, die hier (Fig. 2 und 3) Ringbunde 10a aufweisen, deren Anordnungsbreite der Breite der von den schienenförmigen Leisten 9 gebildeten Gleitflächen entspricht. Das verbrauchte Filtervlies 8 wird, nachdem es aus der Bad-Wanne BW herausgeführt worden ist, von dem Traggurt 5 abgehoben und auf eine Rolle 7a aufgewickelt.

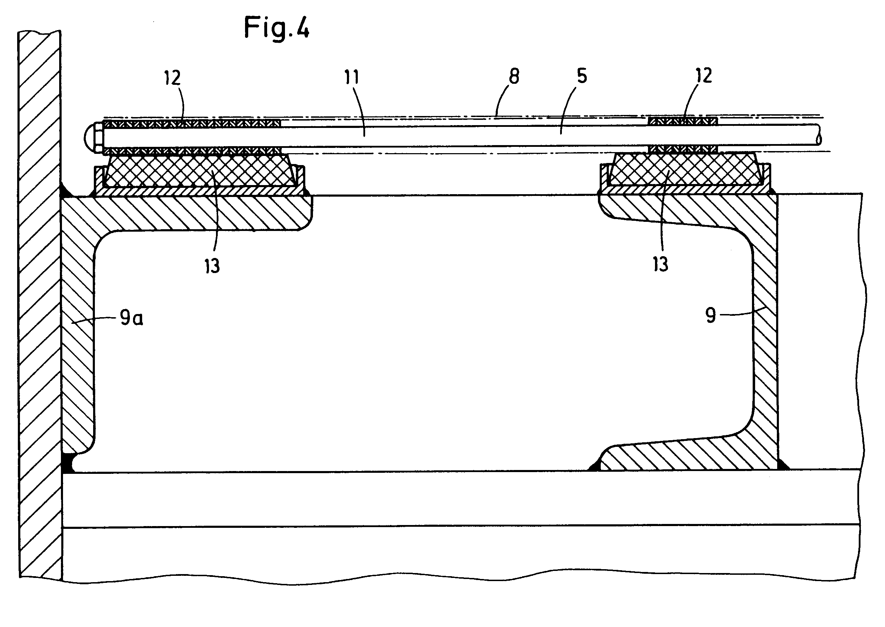

Der Traggurt 5, auf den das Filterbandvlies 8 aufgelegt wird besteht hier (Fig. 4) aus einer Gelenkkette, an deren Kettenbolzen 11 über die Gurtbreite jeweils Reihen einer Mehrzahl von Kettenlaschen 12 mit Abstand nebeneinander angelenkt sind. Diese Reihe von Kettenlaschen 12 bildet ebene Außenflächen, die auf den Gleitzflächen, hier der schienenförmigen Leisten 9, aufliegen und zwar in der Weise, daß jede Reihe Gruppen von dicht nebeneinanderliegenden Kettenlaschen 12 bildet. Diese Gruppen sind in dem Bereich oberhalb jeweils der durch die schienenförmigen Leisten 9 gebildeten Gleitflächen angeordnet. Wie Figur 4 weiter erkennen läßt, ist die Breite der beiden über die Breite der Gelenkkette jeweils außenliegenden Gruppen von Kettenlaschen gleich oder hier größer als die Breite der darunter befindlichen, hier von den schienenförmigen Leisten 9a gebildeten Gleitflächen. Diese Anordnung führt zu einer besonders wirksamen Abdichtung des über dem durch die Gelenkkette und das Filterbandvlies 8 gebildeten Filterbandes befindlichen Raumes der Bad-Wanne BW gegen den darunter befindlichen, eine Unterdruckkammer bildenden Raum (vgl. Fig. 3).

Auf die schienenförmigen Leisten 9 sind (Fig. 4) die Gleiteigenschaften der Gleitflächen verbessernde Kunststoffauflagen 13 aufgesetzt.

Das hier von der so gebildeten Gelenkkette 11, 12 und dem darauf liegenden Filterbandvlies 8 gebildete Filterband wird, wie sich insb. aus der Darstellung nach Fig. 4 ergibt, als ebene, nicht durchhängende Filterfläche über den Boden 6 der Bad-Wanne BW geführt und das Filterbandvlies 8 kann während dieser Führung z.B. bei Abschalten des Unterdrucks nicht aufschwimmen, da die Andruckwalzen 10 mit ihren Ringbunden 10a dies verhindern.

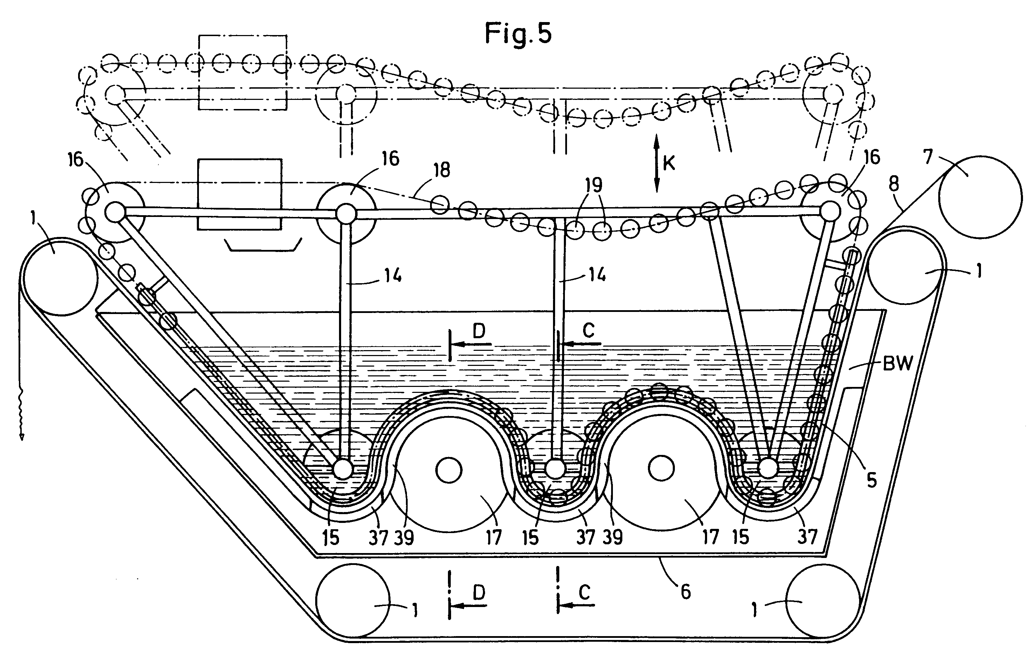

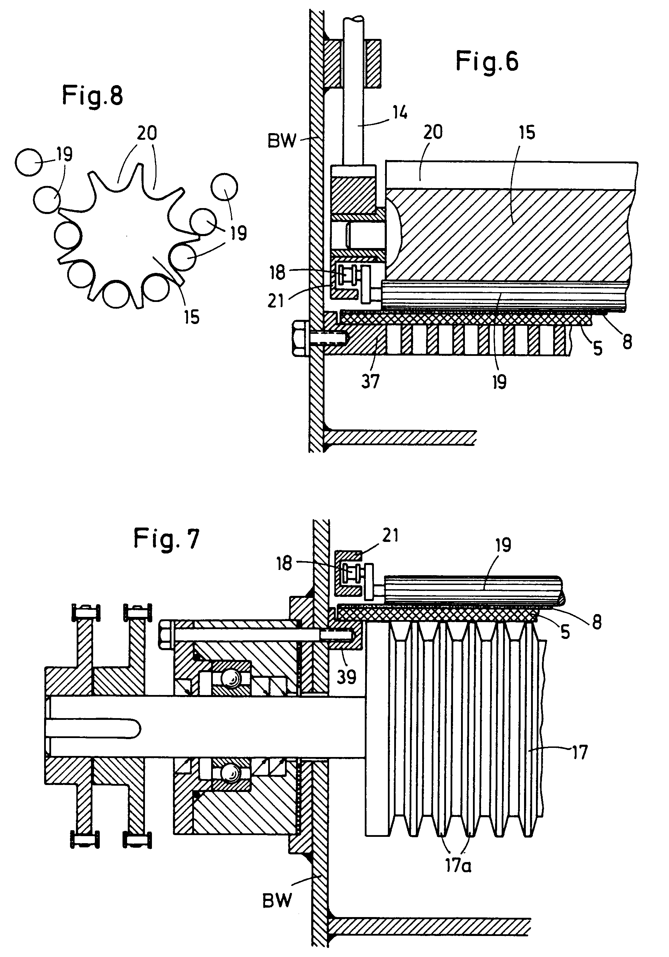

Bei dem Ausführungsbeispiel nach Fig. 5 sind Führungswalzen 16 und besondere Andruckwalzen 15 in einem Tragrahmen 14 angeordnet, der aus der dargestellten Position in der Bad-Wanne BW aus dieser in Richtung des eingezeichneten Doppelpfeils K bspw. in die strichpunktiert dargestellte Lage herausgehoben bzw. wieder angesenkt werden kann. Die jeweilige Positionierung des Tragrahmens 14 ist dabei auf nicht dargestellte Weise einstell- und festlegbar. Ein entsprechend ausgebildeter Tragrahmen, der lediglich Andruckwalzen trägt oder auch Führungswalzen und einen um diese umlaufenden, antreibbaren Traggurt 5 kann auch für die bereits beschriebene Ausbildung nach den Fig. 1 bis 4 Anwendung finden, wobei dann die dort dargestellten Andruckrollen 10 nicht benötigt werden. Beim hier beschriebenen Ausbildungsbeispiel sind oberhalb des Bodens 6 der Bad-Wann BW mit Abständen in Führungsrichtung des Traggurtes 5 Tragwalzen 17 gelagert und die in dem Tragrahmen 14 lagernden Andruckwalzen 15 können bei Absenken des Tragrahmens 14 in die zwischen diesen Tragwalzen 17 gebildete Abstandsspalte eingebracht werden; sie drücken dabei den Traggurt 5 gegen die den jeweiligen Abstandsspalt bildenden Umfangsflächenabschnitte der Tragwalzen 17. Der um die Führungswalzen 16 und die Andruckwalzen 15 geführte Traggurt besteht beim Ausführungsbeispiel aus zwei Endlos-Tragketten 18, mit denen quer zu deren Führungsrichtung hintereinanderliegende Stabkörper 19 verbunden sind, die in der dargestellten Position des Tragrahmens 14 in der Bad-Wanne BW an der Oberseite des Traggurtes 5 anliegen. Dieser Traggurt 5 wird, wie bereits erläutert, mittels Führungswalzen 1 durch die Bad-Wanne BW geführt, und das zugehörige Filterbandvlies 8 wird wie bei der vorhergehend erläuterten Ausbildungsform, von einer Rolle 7 abgewickelt und aufgelegt. Die Andruckwalzen 15 ggfs. Führungswalzen 16 weisen, wie aus den Fig. 6 und 8 hervorgeht, an ihrem Umfang parallel zur Walzenachse verlaufende Mitnehmerausnehmungen 20 auf, die dem Querschnitt der Stabkörper 19 angepaßt sind. Die Endlos -Tragketten 18 sind dabei im Bereich ihrer Umführung um die Andruckwalzen 15 und die Tragwalzen 17 in der aus den Fig. 6 und 7 ersichtlichen Weise in seitlichen Führungskulissen 21 geführt, die ortsfest im Tragrahmen 14 angeordnet sind.

Die Tragwalzen 17 weisen Ringbunde 17a auf, deren Umfangsringflächen zusammen mit an der Bad-Wanne BW angeordneten Ringstützen 39 Stützflächen für den Mittenbereich und die Seiten des Filterbandes bilden. Im Bereich unter den Andruckwalzen 15 liegt das Filterband auf ebenfalls mit der Bad-Wanne BW verbundenen teilzylindrischen Stützschalen 37 auf (Fig. 6 und 7).

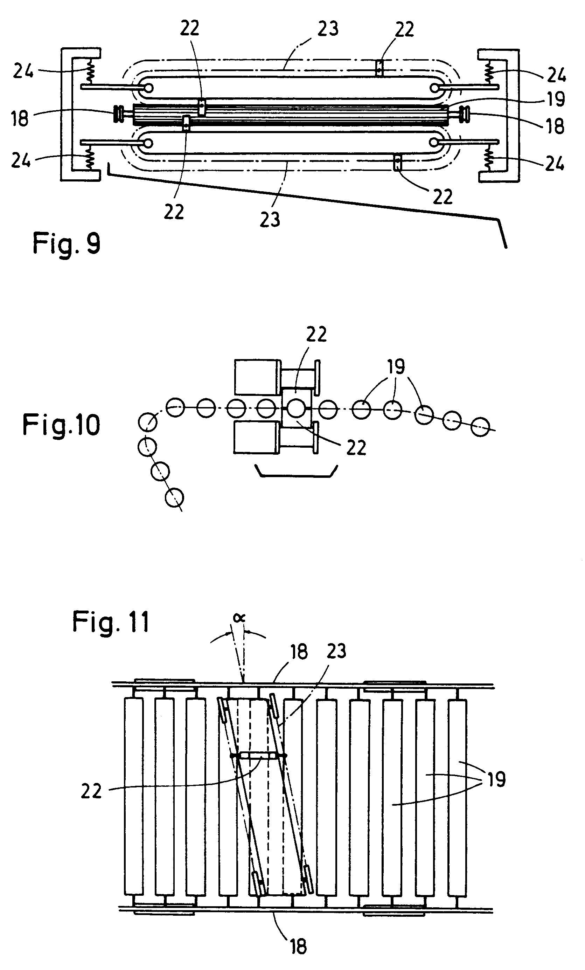

Die mit den Endlos-Tragketten 18 verbundenen, aus einem Magnetwerkstoff bestehenden Stabkörper 19 werden, nachdem die Endlos-Tragketten 18 aus dem Flüssigkeitsbad in der Bad-Wanne BW ausgetreten und oberhalb des Flüssigkeitsspiegels zurückgeführt sind von, den Stabquerschnitt von zwei Seiten her einfassenden Kratzerprofilen 22 eingefaßt, die über die Stablänge parallel zu dieser verfahrbar sind und dabei die auf der Umfangsfläche der Stabkörper haftenden ferritischen Partikel entfernen. Diese Kratzerprofile sind jeweils auf, hier zwei nebeneinanderliegenden Paaren von Bandführungen 23, angeordnet, die elastisch in Federn 24 aufgehängt gegen den Profilstab 19 andrückbar sind. Die von den Bandführungen 23 erzeugten Bewegungen der Kratzerprofile 22 sind dabei gegenüber der Bewegungsrichtung der Endlos-Tragketten 18 mit den Stabkörpern 19 in einem Winkel α (Fig. 11) angeordnet der so bemessen ist, daß bei entsprechend aufeinander abgestimmten Bewegungen der Endlos-Tragketten 18 und der Bandführungen 23 die Zeitspanne einer Abstreifbewegung der Kratzerprofile 22 der in Bewegungsrichtung der Endlos-Tragketten 18 gesehen ersten Bandführung 23 über die Länge des Profilstabes 19 der Zeitspanne entspricht, innerhalb derer der Profilstab 19 unter dieser ersten Bandführung 23 weiterbewegt wurde. Die entsprechende Abstreifbewegung der Kratzerprofile 22 der nächsten Bandführung 23 kann sich dann mit der entsprechenden gleichen Zeitspanne mit der Abstreifbewegung über den folgenden Profilstab 19 anschließen. Auf diese zweite Abstreifbewegung folgt dann in gleicher Weise eine dritte, die wieder von den Kratzerprofilen der ersten Bandführung 23 ausgeführt wird.

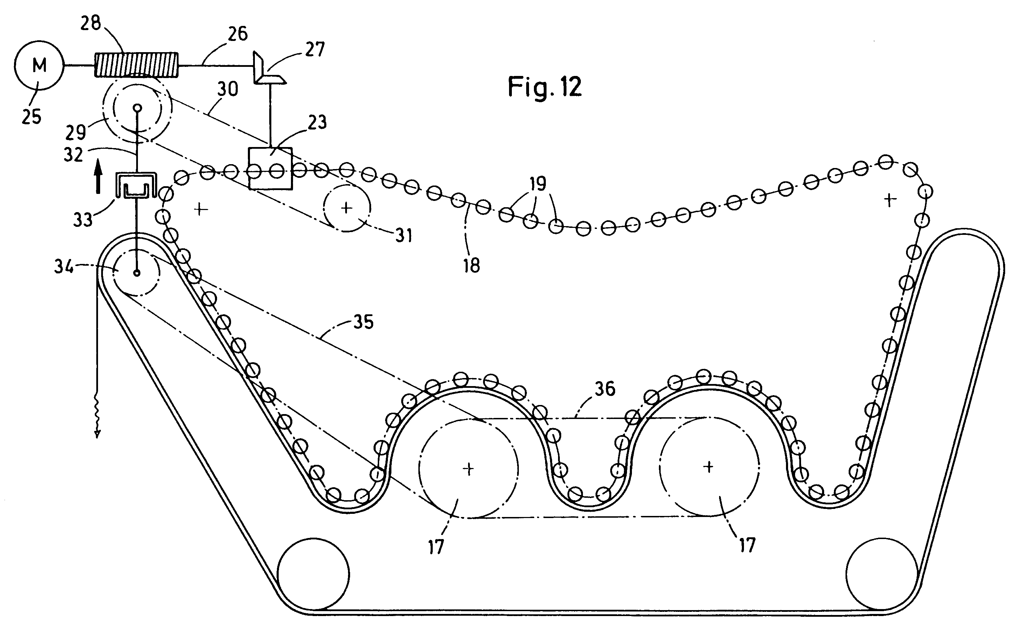

Wie sich aus dem Antriebsschema nach Fig. 12 ergibt, treibt ein reversierbarer Motor 25 über eine Welle 26 und einen Winkeltrieb 27 die Bandführungen 23 für die hier nicht dargestellten Kratzerprofile 22 an. Auf der Welle 26 sitzt eine Schnecke 28, die mit einem Schneckenrad 29 kämmt, über das und einen Kettentrieb 30, 31 die Endlos-Tragketten 18 mit den Stabkörpern 19 angetrieben werden. Mit der Welle 32 des Schneckenrades 29 über eine Kupplung 33 kuppel- und entkuppelbar ist das Antriebsrad 34, das über Ketten 35, 36 die Tragrollen 17 und damit das hier nicht dargestellte Filterband 5 antreibt. Das Übersetzungsverhältnis zwischen Schnecke 28 und Schneckenrad 29 bestimmt das Verhältnis zwischen der Bewegung der Kratzerprofile 22 über die Stabkörper 19 und der Bewegung dieser Stabkörper 19 in Führungsrichtung der Endlos-Tragketten 18 (vgl. Fig. 11), während die Kupplung zwischen Schneckenrad 29 und Kettenrad 34 den Gleichlauf von Endlos-Tragketten 18 und Filterbandvlies 8 gewährleistet.

In der in Fig. 5 wiedergegebenen Stellung kann das Filterbandvlies 8 von der Rolle 7 mit Hilfe der mit den Endlos-Tragketten 18 umlaufenden Profilstäbe 19 in die Bad-Wanne BW eingezogen, um die Andruckrollen 15 und die Tragrollen 17 herumgeführt wieder nach oben aus der Band-Wanne BW herausgebracht werden. Diese Betriebsstellung kommt für Flüssigkeiten mit einem verhältnismäßig geringen Anteil an ferritischen Partikeln in Frage. Übersteigt jedoch der Anteil solcher Partikel den der nicht ferritischen Partikel, die direkt im Filterbandvlies festgehalten werden, dann kann der Tragrahmen 14 angehoben werden und die Endlos-Tragkette 18 mit einer höheren Geschwindigkeit angetrieben werden als das Filterband ; dies bei ausgeschalteter Kupplung 33. Durch diese Betriebsweise läßt sich die z.B. bei mit Fremdölen belasteten Flüssigkeiten gefürchtete Verstopfung des Filtervlieses 8 weitgehend vermeiden, da solche Fremdöle und ferritische Partikel sich in der Regel fest miteinander verbinden und deshalb gemeinsam an den Stabkörpern 19 haften bleiben. Versuche haben ergeben, daß der Anteil von ferritischen Partikeln im von den Stabkörpern 19 abgeschabten Schlamm nur 2 bis 10 % beträgt, während sich der Rest aus Fremdölen und anderen Verschmutzungen zusammensetzt.

Das verschmutzte Filterbandvlies 8 wird über die Umlenkwalze 1 aus der Bad-Wanne BW ausgetragen und entweder unmittelbar in nicht dargestellte Behälter eingebracht oder auf ebenfalls nicht dargestellte Weise zu Abballen ausgewickelt.

Für Anwendungsfälle, bei denen keine ferritischen Partikel vorkommen, können die Stabkörper 19 auch aus unmagnetischen Werkstoffen bestehen, und die Vorrichtung mit den Kratzerprofilen 22 wird nicht benötigt.

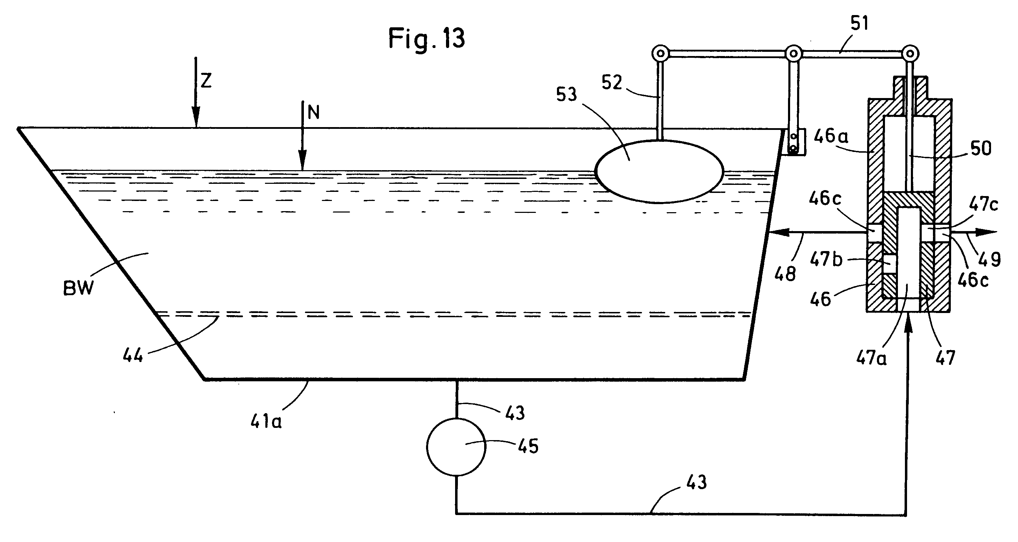

Wie aus Fig. 13 hervorgeht, ist die Zuführleitung für die unbehandelte Badflüssigkeit in die Badwanne BW mit einem Pfeil Z angedeutet. Die Abflußleitung 43 im Boden 41a der Badwanne BW befindet sich unterhalb des, mit einer unterbrochenen Doppellinie schematisch wiedergegebenen Filters 44. Die Abflußleitung 43 führt über eine Förderpumpe 45 in den Strömungsteiler 46. Dieser besteht aus einem senkrechten Zylinder 46a mit einem darin geführten, auf- und abbeweglichen Schieberkolben 47, der eine zentrale Zuführausnehmung 47a und zwei Austrittsausnehmungen 47b und 47c aufweist, die radial von der Zuführausnehmung 47a nach außen abzweigen und axial gegeneinander versetzt angeordnet sind. Diesen beiden Austrittsausnehmungen 47b und 47c sind jeweils Austrittsausnehmungen 46b und 46c zugeordnet, von denen die Austrittsausnehmungen 46b über eine Leitung 48 zurück in die Badwanne BW, und die Austrittsausnehmung 46c über eine Leitung 49 zu einem, nicht dargestellten, nachgeordneten Vorratsbehälter führt. Der Schieberkolben 47 ist über eine Kolbenstange 50 und Hebellenker 51, 52 mit einem Schwimmkörper 53 verbunden, der auf der Badflüssigkeit schwimmt, deren Niveauspiegel mit N angedeutet ist.

In der dargestellten Position von Schieberkolben 47 und Schwimmkörper 53 wird die gesamte, von der Förderpumpe 45 über die Abflußleitung 43 in die zentrale Zuführausnehmung 47a abgeführte Menge behandelter Badflüssigkeit durch die miteinander fluchtenden Austrittsausnehmungen 47c und 46c über die Leitung 49 abgeführt. Sinkt der Niveauspiegel N der Badflüssigkeit ab, dann bewegt sich der Schwimmkörper 53 ebenfalls nach unten und bewirkt über die Hebellenker 51, 52 ein Anheben der Kolbenstange 50 mit dem Schieberkolben 47. Dies hat zur Folge, daß der Abfluß der Badflüssigkeit über die nun, gegeneinander verschobenen Austrittsausnehmungen 46c, 47c verringert und dafür über die Austrittsausnehmungen 47b, 46c ein Rückfluß eines Teils der Badflüssigkeit über die Leitung 48 in die Badwanne BW zurück bewirkt wird.

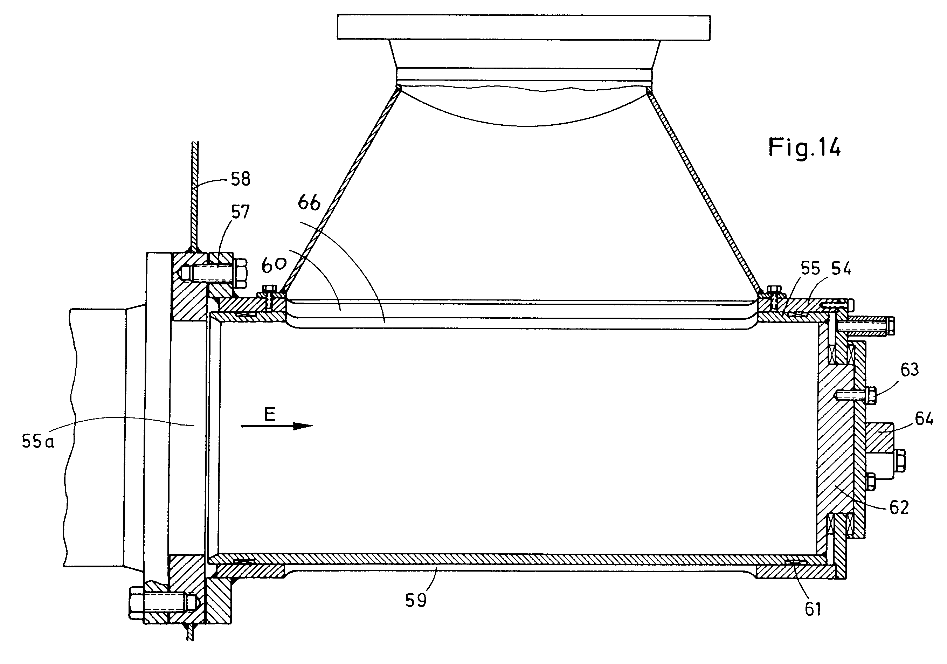

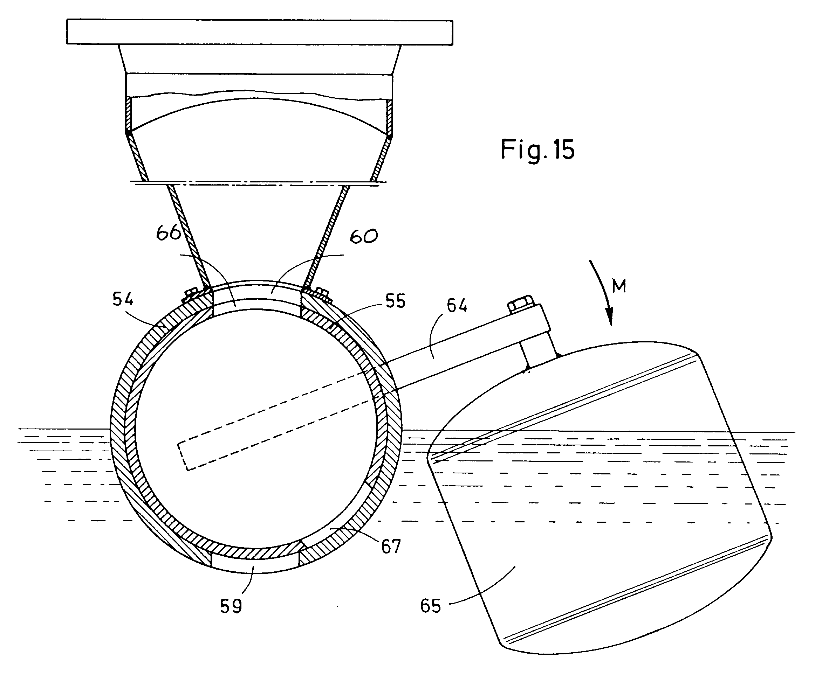

Der Strömungsteiler nach den Fig. 14 und 15 wird aus zwei Zylinderrohren 54 und 55 gebildet, die mit ihren Innen- bzw. Außenflächen aneinanderliegend, achskonzentrisch ineinandergesteckt sind. Das äußere Zylinderrohr 54 ist fest mit einem Flansch-Tragring verbunden, der mit Hilfe von Schrauben 57 an einem ortsfesten Tragrahmen 58 sein bspw. an dem der Badwanne BW befestigt ist. In der Wandung des äußeren Zylinderrohres 54 sind, einander gegenüberliegend, im unteren und oberen Bereich achsparallele Austrittsschlitzausnehmungen 59 bzw. 60 angeordnet, von denen die untere 59 in der, nicht dargestellten Badwanne BW mündet, während die obere 60, über, ebenfalls nicht dargestellte Leitungen, die der Leitung 49 der Ausbildung nach Fig. 13 entspricht, mit dem Vorratsbehälter verbunden ist. Das innere Zylinderrohr 55 ist mit Lagerrollen 61 in dem äußeren Zylinderrohr 54 drehgelagert und weist an seiner einen Stirnseite eine Eintrittsöffnung 55a auf, in die, von der nicht dargestellten Förderpumpe, die der Förderpumpe 45 nach der Ausbildung gem. Fig. 13 entspricht, kommende Leitung 43 mündet. Die andere Seite des inneren Zylinderrohres 55 ist durch eine Scheibe 62 verschlossen. Auf dieser Scheibe 62 sitzt, mit Schrauben 63 befestigt, ein einarmiger Hebel 64, der an seinem freien Ende einen Schwimmkörper 65 trägt. In der Wandung des inneren Zylinderrohres sind ebenfalls zwei achsparallel verlaufende Austrittsausnehmungen 66 bzw. 67 angeordnet; von diesen sind die Austrittsausnehmungen 66 der Austrittsausnehmung 60 und die Austrittsausnehmung 67 der Austrittsausnehmung 59 des äußeren Zylinderrohres 54 zugeordnet.

Bei der in den Fig. 14 und 15 dargestellten Drehposition des inneren Zylinderrohres 55 zum äußeren Zylinderrohr 54 wird der, in Richtung des, in der Eintrittsöffnung 55a wiedergegebenen Pfeils E eintretende, aus der Ablaufleitung 43 kommende Badflüssigkeitsstrom über die, miteinander fluchtenden Austrittsschlitzausnehmungen 66 und 60 ungeteilt dem, nicht dargestellten, Vorratsbehälter zugeführt, da sich der Schwimmkörper 65 (Fig. 15) in seiner, durch den Niveau-Spiegel N der Badflüssigkeit bestimmten Position befindet. Bewegt sich der Schwimmkörper 65 beim Absinken dieses Niveau-Spiegels N in Richtung des in Fig. 15 wiedergegebenen Pfeiles E nach unten, dann wird durch die Verschiebung der Austrittsschlitzausnehmungen 66, 60 und 67, 59 gegeneinander, die Menge der, durch die Austrittsschlitzausnehmungen 66, 60 zum Vorratsbehälter strömenden Badflüssigkeit verringert und durch die Austrittsschlitzausnehmungen 67, 59 die Möglichkeit des Rückflusses des entsprechenden Mengenanteils an der Badflüssigkeit in die Badwanne BW geschaffen.

Die Einrichtung arbeitet wie folgt: Die Förderpumpe 45 (Fig. 13) saugt aus dem Raum unterhalb des Filterbandes die durch dieses hindurchtretende Flüssigkeit ab und erzeugt dabei einen Unterdruck in diesem Raum. Der dabei infolge des höheren Druckes im Raum oberhalb des Filterbandes entstehende Differenzdruck führt, wenn er einen vorgegebenen Maximalwert erreicht hat, zu der Notwendigkeit, die verschmutzte Länge des Filterbandes aus der filterwirksamen Stellung herauszufahren und die folgende, unverschmutzte Länge in diese Stellung einzubringen. Da die vom Filterband umschlungene Fläche der Tragwalzen 17 größer ist als die der zwischen diesen angeordneten Andruckwalzen 15, wird bei einem etwa gleichen Reibungsfaktor beider Walzen das Filterband trotz des auf diesem lastenden, durch den Differenzdruck bewirkten Anpreßdruckes weitertransportiert.

### Bezugszeichenliste

- 1: Führungsrolle
- 2: Führungsrolle (Antriebsrolle)
- 2a: Führungsrolle
- 2b: Führungsrolle
- 2c: Führungsrolle
- 3: Motor
- 4: Vorgelege
- 5: Traggurt
- 6: Boden (der Bad-Wanne BW)
- 7: Rolle
- 7a: Rolle
- 8: Filterbandvlies
- 9: Leisten (schienenförmig)
- 10: Andruckrolle
- 10a: Ringbunde der Andruckrolle (10)
- 10b: Andruckrolle
- 11: Kettenbolzen
- 12: Kettenlaschen
- 13: Kunststoffauflagen
- 14: Korbrahmen
- 15: Andruckrolle
- 16: Führungsrolle
- 17: Tragwalzen
- 17a: Ringbunde (der Tragwalze 17)
- 18: Endlos-Tragkette
- 19: Stab-Körper
- 20: Mitnehmerausnehmung
- 21: Führungskulissen
- 22: Kratzerprofile
- 23: Bandförderer
- 24: Federn
- 25: Motor
- 26: Welle
- 27: Winkeltrieb
- 28: Schnecke
- 29: Schneckenrad
- 30: Kettentrieb
- 31: Kettentrieb
- 32: Welle des Schnekkenrades (29)
- 33: Kupplung
- 34: Kettenrad
- 35: Ketten
- 36: Ketten
- 37: Stützschalen
- 39: Ringstützen
- BW: Bad-Wanne
- S: Pfeil
- K: Doppelpfeil
- L: Pfeil
- Z: Pfeil
- E: Pfeil
- M: Pfeil
- 41a: Boden (der Badwanne BW)
- 43: Abflußleitung
- 44: Filter
- 45: Förderpumpe
- 46: Strömungsteiler
- 46a: senkrechter Zylinder
- 46b: Austrittsausnehmung
- 46c: Austrittsausnehmung
- 47: Schieberkolben
- 47a: Zuführausnehmung
- 47b: Austrittsausnehmung
- 47c: Austrittsausnehmung
- 48: Leitung
- 49: Leitung
- 50: Kolbenstange
- 51: Hebellenker
- 52: Hebellenker
- 53: Schwimmkörper
- 54: Zylinderrohr (äußeres)
- 55: Zylinderrohr (inneres)
- 55a: Eintrittsöffnung
- 57: Schrauben
- 58: Tragrahmen
- 59: Austrittsschlitzausnehmung
- 60: Austrittsschlitzausnehmung
- 61: Lagerrollen
- 62: Scheibe
- 63: Schrauben
- 64: (einarmiger) Hebel
- 65: Schwimmkörper
- 66: Austrittsschlitzausnehmung
- 67: Austrittsschlitzausnehmung

## Patentansprüche

1. Bandfiltereinrichtung zum Ausbringen von Fremdpartikeln aus Flüssigkeitsbädern, bestehend aus einer, die Flüssigkeit aufnehmenden Badwanne (BW), einem Filterband, das als ein, auf einen endlosen, perforierten Traggurt (5) auflegbares, von einer Rolle (7) abwickelbares Filterbandvlies (8) ausgebildet ist, einer, in der Badwanne (BW) angeordneten, mit einer Unterdruck erzeugenden Einrichtung verbundenen, mit einer oberen Öffnung versehenen Unterdruckkammer, das Filterbandvlies (8) über seine Breite beaufschlagende, zum Teil angetriebene Führungswalzen (2, 2a, 10, 10b), die den endlosen Traggurt (5) und das Filterbandvlies (8) von oben in die Badwanne (BW) über die Öffnung der Unterdruckkammer einbringen und dann nach oben und anschließend den Traggurt (5) nach unten, unter der Unterdruckkammer her, mit Abstand vom Boden (6) der Badwanne (BW) wieder nach oben aus dieser herausführen, sowie über der Öffnung der Unterdruckkammer, in Bewegungsrichtung des Traggurtes und des Filterbandvlieses (8), nebeneinanderverlaufend angeordnete Stützelemente (9) mit Gleitflächen für den aufliegenden Traggurt mit dem Filterbandvlies (8),
**dadurch gekennzeichnet,**
daß weitere Führungswalzen (10, 10b), die als Band-Andruckwalzen ausgebildet, von oben her auf das Filterbandvlies (8) aufleg- und von diesem abhebbar sind, vorgesehen sind, und die derart angeordnet sind, daß das Filterband (8) jeweils mit dem gesamten filterwirksamen Bandabschnitt gleichmäßig über der Öffnung der Unterdruckkammer aufliegt.

2. Bandfiltereinrichtung nach Anspruch 1,
**dadurch gekennzeichnet,**
daß die Stützelemente schienenförmige Leisten (9, 9a) sind, auf denen Auflagen (13) als Gleitflächen vorgesehen sind.

3. Bandfiltereinrichtung nach den Ansprüchen 1,
**dadurch gekennzeichnet,**
daß die, die Andruckwalzen (15) bildenden Führungswalzen in einem, von oben in die Badwanne (BW) absenk- und heraushebbaren korbförmigen Tragrahmen (14) angeordnet sind und dieser korbförmige Tragrahmen (14) in Hubrichtung positionseinstell- und festlegbar ist.

4. Bandfiltereinrichtung nach den Ansprüchen 1 oder 3,
**dadurch gekennzeichnet,**
daß die Gleitflächen über der Öffnung der Unterdruckkammer durch die Umfangsringflächen von Ringbunden (17a) einer Mehrzahl von, in Bewegungsrichtung des Traggurtes und des Filterbandvlies (8) mit Abständen über den Boden (6) der Badwanne (BW) in dieser gelagerten Tragwalzen (17) gebildet werden, und Andruckwalzen (15) in die, zwischen den Tragwalzen (17) gebildeten Abstandsspalte einbring- und gegen das, auf dem, den Abstandsspalt bildenden Umfangsflächenabschnitten der Tragwalzen (17) aufliegende Filterbandvlies (8) andrückbar sind.

5. Bandfiltereinrichtung nach Anspruch 4,
**dadurch gekennzeichnet,**
daß die Umfangsflächen der Tragwalzen (17) und/oder der Andruckwalzen (15) Perforationen aufweisen.

6. Bandfiltereinrichtung nach einem der Ansprüche 1 bis 5,
**dadurch gekennzeichnet,**
daß der Traggurt aus einer Gelenkkette besteht, an deren Kettenbolzen (11) über die Gurtbreite jeweils Reihen einer Mehrzahl von Kettenlaschen (12) mit Abstand nebeneinander angelenkt sind, wobei dem Boden (6) der Badwanne (BW) zugewandte ebene Außenflächen der Kettenlaschen (12) auf den Gleitflächen aufliegen.

7. Bandfiltereinrichtung nach einem der Ansprüche 1 bis 3,
**dadurch gekennzeichnet,**
daß im korbförmigen Tragrahmen (14) ein Umlaufgurt aus einem Paar von Endlostragketten (18) angeordnet ist, mit denen, quer zu deren Bewegungsrichtung hintereinanderliegende Stabkörper (19) verbunden sind, die bei Betriebsstellung des, in die Badwanne (BW) abgesenkten Tragrahmens (14) mit dem Umlauf der Endlos-Tragketten (18) an der Oberseite des Filterbandvlieses (8) anliegen bzw. im Abstand von dieser umlaufen.

8. Bandfiltereinrichtung nach Anspruch 7,
**dadurch gekennzeichnet,**
daß die Stabkörper (19) in an sich bekannter Weise aus einem Magnetwerkstoff bestehen.

9. Bandfiltereinrichtung nach den Ansprüchen 7 oder 8,
**dadurch gekennzeichnet,**
daß die Endlos-Tragketten (18) mindestens im Bereich ihrer Umführung um die Andruckwalzen (15) und um die Tragwalzen (17) in seitlichen, in ortsfesten Tragrahmen (14) angeordneten Führungskulissen (21) geführt sind.

10. Bandfiltereinrichtung nach einem der Ansprüche 7 bis 9,
**dadurch gekennzeichnet,**
daß am Umfang der Andruckwalzen (15) dem Querschnitt der Stabkörper (19) angepaßte, parallel zur Rollenachse verlaufende Mitnehmerausnehmungen (20) angeordnet sind.

11. Bandfiltereinrichtung nach einem der Ansprüche 7 bis 9,
**dadurch gekennzeichnet,**
daß der Traggurt (5) im Bereich der Tragwalzen (17) mit seinen Seitenbereichen auf Ringstutzen (39) und im Bereich unter den Andruckwalzen (15) auf Stützschalen (37) aufliegt, die jeweils mit der Badwanne (BW) verbunden sind.

12. Bandfiltereinrichtung nach einem der Ansprüche 7 bis 11,
**gekennzeichnet durch**
daß Kratzerprofile (22) die den Stabquerschnitt von zwei Seiten her einfassend, über die Stablänge verfahrbar sind und, auf der Umfangsfläche der Stabkörper (19) anhaftende ferritische Partikel von deren Umfangsfläche entfernen, jeweils aus zwei oder mehreren nebeneinanderliegenden Paaren, oberhalb und unterhalb des Stabkörpers (19) angeordneter, elastisch gegen diesen andrückbaren Bandförderern (23) bestehen, wobei deren Transportbewegung gegenüber der Bewegungsrichtung der Endlos-Tragkette (18) in einem Winkel (α) verläuft, der so bemessen ist, daß bei entsprechend aufeinander abgestimmten Bewegungen der Endlos-Tragketten (18) und der Bandförderer (23) die Zeitspanne zwischen Beginn und Ende einer Abstreifbewegung des Kratzerprofilpaares (22) des, in Bewegungsrichtung der Endlos-Tragketten (18) ersten Bandförderers (23) über die Stablänge entspricht, innerhalb derer der Stabkörper (19) unter diesen ersten Bandförderer (23) her transportiert wurde, und die entsprechende Abstreifbewegung des Kratzerprofilpaares (22) des nächsten Bandförderers (23) sich mit der entsprechend gleichen Zeitspanne unmittelbar daran anschließt.

13. Bandfiltereinrichtung für eine Niveauregelung der Badflüssigkeit nach einem der Ansprüche 1 bis 12,
**gekennzeichnet, durch**
einen, in Abflußrichtung hinter einer Förderpumpe (45) angeordneten, ein Teil der Gesamtmenge der abfließenden, behandelten Badflüssigkeit in die Badwanne (BW) zurück, und den anderen Teil bzw. die Gesamtmenge der Badflüssigkeit von der Badwanne (BW) wegleitenden, in Abhängigkeit von dem Niveauspiegel (N) der Badflüssigkeit in der Badwanne (BW) stufenlos verstellbaren Strömungsteiler.

14. Bandfiltereinrichtung nach Anspruch 13,
**dadurch gekennzeichnet,**
daß ein von der Badflüssigkeit getragener Schwimmkörper (53) eine zentrale Zuführausnehmung (47a) und zwei, radial von dieser abzweigende, axial gegeneinander versetzte Austrittsausnehmungen, (47b, 47c) aufweist, denen, in einer gemeinsamen Radialebene angeordnete Austrittsausnehmungen (46b, 46c) im Zylinder (46a) zugeordnet sind.

15. Bandfiltereinrichtung nach Anspruch 14,
**dadurch gekennzeichnet,**
daß der Strömungsteiler aus achskonzentrisch, aneinander anliegend, ineinandergesteckten und gegeneinander verdrehbaren Zylinderrohren (54, 55) besteht, wobei das äußere Zylinderrohr (54) ortsfest angeordnet ist und achsparallele Austrittsschlitzausnehmungen (59, 60) aufweist, und das innere Zylinderrohr (55) drehbar gelagert, diesen Austrittsschlitzausnehmungen (59, 60) entsprechende, ebenfalls achsparallele Austrittsschlitzausnehmungen (67, 66) und an einer Stirnseite eine Eintrittsöffnung (55a) aufweist und an der anderen, geschlossenen Stirnseite mit einem einarmigen, einen Schwimmkörper (65) tragenden Hebel (64) verbunden ist.

## Claims

1. Belt filter equipment for removing foreign particles from liquid baths, consisting of a bath tank (BW) receiving the liquid, a filter belt which is constructed as a filter belt fleece (8) placeable on an endless perforated carrier belt (5) and unwindable from a roll (7), an underpressure chamber which is arranged in the bath tank (BW), is connected with an equipment generating underpressure and is provided with an upper opening, guide rollers (2, 2a, 10, 10b) which load the filter belt fleece (8) over its width, are in part driven and which introduce the endless carrier belt (5) and the filter belt fleece (8) from above into the bath trough (BW) by way of the opening of the underpressure chamber and then upwardly and subsequently guide the carrier belt (5) on downwardly below the underpressure chamber and at a spacing from the base (6) of the bath tank (BW) and again upwardly out of this, as well as support elements (9), which are arranged to extend adjacent to one another above the opening of the underpressure chamber and in the direction of movement of the carrier belt and the filter belt fleece (8), with slide surfaces for the contacting carrier belt with the filter belt fleece (8), characterised thereby that further guide rollers (10, 10b), which are constructed as belt pressing-down rollers and which are layable from above onto the filter belt fleece (8) and raisable off this, are provided and are arranged in such a manner that the filter belt (8) is placed uniformly over the opening of the underpressure chamber each time by the entire belt portion effective as filter.

2. Belt filter equipment according to claim 1, characterised thereby that the support elements are rail-shaped strips (9, 9a), on which overlays (13) are provided as slide surfaces.

3. Belt filter equipment according to claim 1, characterised thereby that the guide rollers forming the pressing-down rollers are arranged in a basket-shaped frame (14) which is lowerable from above into and raisable out of the bath tank (BW) and this basket-shaped carrier frame (14) is adjustable and fixable in position in stroke direction.

4. Belt filter equipment according to claims 1 or 3, characterized thereby that the slide surfaces above the opening of the underpressure chamber are formed by the circumferential annular surfaces of collars (17a) of a plurality of carrier rollers (17) which in the direction of movement of the carrier belt and of the filter belt fleece (8) are mounted in the bath tank (BW) at spacings above the base (6) thereof, and pressing-down rollers (15) are introducible into the spacing gap formed between the carrier rollers (17) and pressable against the filter belt fleece (8) resting on those circumferential surface portions of the carrier rollers (17) that form the spacing gap.

5. Belt filter equipment according to claim 4, characterised thereby that the circumferential surfaces of the carrier rollers (19) and/or of the pressing-down rollers (15) have perforations.

6. Belt filter equipment according to one of claims 1 to 5, characterised thereby that the carrier belt consists of a link chain, at the link pins (11) of which rows of a plurality of link straps (12) are each time articulated at a spacing alongside one another over the belt width, wherein flat outer surfaces, which face the base (6) of the bath tank (BW), of the link straps (12) rest on the slide surfaces.

7. Belt filter equiment according to one of claims 1 to 3, characterised thereby that a circulating belt is arranged in the basket-shaped carrier frame (14) and consists of a pair of endless carrier chains (18), with which rod elements (19) disposed one behind the other transversely to the direction of movement of the chains are connected, which rod elements, in the operational setting of the carrier frame (14) lowered into the bath tank (BW), circulate with the circulation of the endless carrier chain (18) while lying on the upper side of the filter belt fleece (8) or at a spacing therefrom.

8. Belt filter equipment according to claim 7, characterised thereby that the rod elements (19) consist in known manner of a magnetic material.

9. Belt filter equipment according to claims 7 or 8, characterised thereby that the endless carrier chains (18) are guided, at least in the region of their guidance around the pressing-down rollers (15) and around the carrier rollers (17), in lateral guide tracks (21) arranged in stationary carrier frames (14).

10. Belt filter equipment according to one of claims 7 to 9, characterised thereby that entraining recesses (20) which are matched to the cross-section of the rod elements (19) and extend parallel to the roll axis, are arranged at the circumference of the pressing-down rollers (15).

11. Belt filter equiupment according to one of claims 7 to 8, characterised thereby that the carrier belt (5) lies, in the region of the carrier rollers (17), by its side regions on annular supports (39) and, in the region under the pressing-down rollers (15), on support pans (37), which are connected each time within the bath tank (BW).

12. Belt filter equipment according to one of claims 7 to 11, characterised by [that] scraper profiles (22), which enclose the rod cross-section from two sides, are movable over the rod length and remove from the circumferential surface of the rod elements (19) ferritic particles adhering to that circumferential surface, consisting each time of two or more adjacently disposed pairs of belt conveyors (23) which are arranged above and below the rod element (19) and are resiliently pressable thereagainst, wherein the transport movement of the belt conveyors relative to the direction of movement of the endless carrier chains (18) extends at an angle (α) which is so dimensioned that in the case of corresponding mutually matched movements of the endless carrier chains (18) and the belt conveyors (23) the time interval between start and finish corresponds, over the rod length, with a stripping movement of the scraper profile pair (22) of the first belt conveyor (23) in the direction of movement of the endless carrier chains (18), within which interval the rod element (19) was transported on under this first belt conveyor (23), and the corresponding stripping movement of the scraper profile pair (24) of the next belt conveyor (23) directly follows thereon with the correspondingly same time interval.

13. Belt filter equipment for a level regulation of the bath liquid according to one of claims 1 to 12, characterised by a flow divider which is arranged behind a conveying pump (45) in outflow direction, is steplessly adjustable in dependence on the surface level (N) of the bath liquid in the bath tank (BW) and conducts a part of the total quantity of the outflowing treated bath liquid back into the bath tank (BW) and the other part or the entire quantity of the bath liquid away from the bath tank (BW).

14. Belt filter equipment according to claim 13, characterised thereby that a float body (53) carried by the bath liquid has a central feed recess (47a) and two outlet recesses (47b, 47c) which radially deviate therefrom, are axially offset relative to one another and are associated with outlet recesses (46b, 46c), which are arranged in a common radial plane, in the cylinder (46).

15. Belt filter equipment according to claim 14, characterised thereby that the flow divider consists of axially concentric cylindrical pipes (54, 55) which lie against one another, are plugged into one another and are rotatable relative to one another, wherein the outer cylindrical pipe (54) is arranged to be stationary and has axially parallel outlet slot recesses (59, 60), and the inner cylindrical pipe (55) is rotatably mounted, has outlet slot recesses (67, 66), which correspond to these outlet slot recesses (59, 60) and are likewise axially parallel and at one end face has an inlet opening (55a) and at the other, closed end face is connected with a single-arm lever (64) carrying a float body (65).

## Revendications

1. Installation de filtre à bande pour l'évacuation d'impuretés de bains de matières liquides, constituée par une cuve de bain ( BW) pour les matières liquides, par une bande filtrante qui consiste en un mat filtrant (8) déposable sur une bande sans fin ajourée (5) et déroulable d'une bobine (7), par une chambre de dépression agencée dans la cuve de bain (BW) et relié à un dispositif de génération de dépression et munie d'une ouverture supérieure, par des cylindres de guidage ( 2,2a,1O,1O6) partiellement entraînés qui agissent sur la largeur du mat filtrant (8) et qui guident la bande sans fin de support (5) et le mat filtrant (8) du haut dans la cuve de bain (BW) en les faisant passer sur l'ouverture de la chambre de dépression et ensuite vers le haut et puis la bande de support (5) vers le bas, sous la chambre de dépression, à distance du fond (6) de la cuve de bain (BW), de nouveau vers le haut, hors de la cuve, ainsi que par des éléments de support (9) agencés au-dessus de l'ouverture de la chambre de dépression, l'un à côté de l'autre, dans la direction de déplacement de la bande de support et du mat filtrant (8), lesdits éléments de support (9) comportant des surfaces de glissement pour la bande de support munie du mat filtrant qui s'y appuie, caractérisée en ce que d'autres cylindres de guidage (1O,1O6) qui consistent en des cylindres de pression sont agencés de façon à pouvoir être abaissés du haut sur le mat filtrant (8) et à pouvoir en être relevés, et sont agencés de telle sorte que la bande filtrante (8) repose chaque fois uniformément par tout son segment filtrant efficace sur l'ouverture de la chambre de dépression.

2. Installation de filtre à bande selon la revendication 1 caractérisée en ce que les éléments de support consistent en des profilés en forme de rail (9,9 a) qui sont recouverts de revêtements (13) servant de surfaces de glissement.

3. Installation de filtre à bande selon la revendication 1 caractérisée en ce que les cylindres de guidage qui servent de cylindres de pression (15) sont agencés dans un cadre de support (14) en forme de panier qui est abaissable dans la cuve (BW), retirable de celle-ci et en ce que ce cadre de support en forme de panier (14) est réglable en position, dans la direction de déplacement.

4. Installation de filtre à bande selon la revendication 1 ou 3 caractérisée en ce que les surfaces de glissement au-dessus de l'ouverture de la chambre de dépression consistent en des surfaces d'enveloppes circulaires de bagues (17a) agencées sur une pluralité de cylindres de support (17) logés dans la cuve de bain (BW), orientées dans la direction de déplacement de la bande de support et du mat filtrant (8), à distance au-dessus du fond (6) de ladite cuve (BW), et en ce que des cylindres d'appui (15) sont prévus pour être introduits dans les fentes d'espacement entre les cylindres de support (17) et appliqués contre le mat filtrant (8) qui repose sur les secteurs de surfaces d'enveloppe du cylindre de support (17), qui forment la fente d'espacement.

5. Installation de filtre à bande selon la revendication 4 caractérisée en ce que les surfaces d'enveloppe des cylindres de support (17) et/ou des cylindres d'appui (15) comportent des perforations.

6. Installation de filtre à bande selon l'une des revendications 1 à 5 caractérisée en ce que la bande de support consiste en une chaîne articulée dont les tourillons de chaîne (11) sont chacun associés à une pluralité de maillons (12) agencés à distance l'un de l'autre, sur la largeur de la bande, des surfaces extérieures planes des maillons de chaîne (12), orientées vers le fond (6) de la cuve de bain (BW) glissant sur les surfaces de glissement.

7. Installation de filtre à bande selon l'une des revendications 1 à 3 caractérisée en ce que le cadre de support (14) en forme de panier comporte une bande sans fin constituée par une paire de chaînes sans fin (18) reliées par des éléments de barreau (19) agencés l'un derrière l'autre transversalement par rapport à la direction de déplacement, lesdits éléments de barreau étant appuiés contre la face supérieure du mat filtrant (8) ou circulant à distance de celle-ci en fonction de la circulation des chaînes sans fin (18), lorsque le cadre de support (14) est abaissé dans la cuve (BW) et est en position de fonctionnement.

8. Installation de filtre à bande selon la revendication 7 caractérisée en ce que les éléments de barreau (19) consistent de façon connue en soi en un matériau magnétique.

9. Installation de filtre à bande selon la revendication 7 ou 8 caractérisée en ce que les chaînes de support sans fin (18) sont guidées dans des coulisses de guidage latérales (21) pratiquées dans des cadres fixes (14), au moins dans la zone du passage autour des cylindres de pression (15) et autour des cylindres de support (17).

10. Installation de filtre à bande selon l'une des revendications 7 à 9 caractérisée en ce que la surface enveloppe des cylindres de pression (15) comporte des évidements d'entraînement (20) adaptés à la section des éléments de barreau (19) et parallèles à l'axe de cylindre.

11. Installation de filtre à bande selon l'une des revendications 7 à 9 caractérisée en ce que la bande de support (5) repose, dans la zone des cylindres de support (17), par ses parties latérales sur des appuis annulaires (39) et, dans la zone située en-dessous des cylindres de pression (15), sur des coquilles de support (37), qui sont chaque fois reliées à la cuve de bain (BW).

12. Installation de filtre à bande selon l'une des revendications 7 à 11 caractérisée en ce que des scrapers profilés (22) qui entourent la section des barreaux de deux côtés et qui sont déplaçables sur la longueur des barreaux et éliminent les particules ferritiques de la surface d'enveloppe de ceux-ci, consistent chacun en une ou plusieurs paires de bandes transporteuses (23)agencées l'une à côté de l'autre, au-dessus et en dessous des barreaux (19), appuyables élastiquement contre ceux-ci, le mouvement de déplacement de ces bandes transporteuses formant un angle (α) avec la direction de déplacement de la chaîne de support sans fin (18), angle (α) qui est déterminé de telle sorte que, pour les mouvements des chaînes de support sans fin (18) et des bandes transporteuses (23) adaptées de façon correspondante, le laps de temps entre le début et la fin d'un mouvement de scrapage de la paire de scrapers profilés (22) de la première bande transporteuse (23), vu dans le sens de déplacement des chaînes de support sans fin (8), sur la longueur de barreau correspond au laps de temps pendant lequel l'élément de barreau (19) est transporté sous cette première bande transporteuse (23), et que le mouvement de scrapage correspondant de la paire de scrapers profilés (22) de la bande transporteuse suivante (23) suit immédiatement et s'étend sur un laps de temps correspondant.

13. Installation de filtre à bande pour le réglage de niveau du bain de liquide, selon l'une des revendications 1 à 12 , caractérisée par un distributeur qui est agencé derrière une pompe (45), vu dans le sens de l'écoulement, qui ramène dans la cuve (BW) une partie de la quantité totale de liquide traité s'écoulant de ladite cuve, et évacue l'autre partie ou la quantité totale de ce liquide et qui est réglable de façon continue en fonction du niveau de liquide (N) dans la cuve de bain (BW).

14. Installation de filtre à bande selon la revendication 13 caractérisée en ce qu'un flotteur (53) porté par le liquide comporte une ouverture centrale d'admission (47a) et deux ouvertures radiales axialement opposées (47b, 47c) partant de celle-ci (47a) auxquelles sont associées des ouvertures d'évacuation (46b, 46c) pratiquées dans le cylindre (46a), dans un plan radial commun.

15. Installation de filtre à bande selon la revendication 13 caractérisée en ce que le distributeur consiste en des tubes cylindriques (54,55) concentriques, emboîtés l'un dans l'autre en contact l'un avec l'autre et de façon à pouvoir tourner l'un par rapport à l'autre, le tube cylindrique extérieur (54) étant fixe et comportant des ouvertures d'évacuation (59,60) en forme de fentes parallèles à l'axe, le tube intérieur (55) étant agencé de façon à pouvoir tourner, comportant également des ouvertures d'évacuation en forme de fentes parallèles à l'axe correspondant aux ouvertures en forme de fentes (59,6O) et, à une face frontale, une ouverture d'admission (55a), et ledit tube cylindre intérieur étant encore relié, à l'autre face frontale, opturée, à un levier (64) à un seul bras muni d'un flotteur (65).
